# EUROPEAN PATENT APPLICATION

(11) **EP 4 556 089 A1**
(43) Date of publication of application: **21.05.2025**
(21) Application number: 23205063.3
(22) Date of filing: 20.10.2023

(54) **FILTER ELEMENTS AND ASSEMBLIES**

(71) Applicant: Donaldson Company, Inc., Bloomington, MN 55431 (US)
(72) Inventor: CATOOR, Bart, Bloomington, 55431 (US); VERSTRAETE, Mathijs, Bloomington, 55431 (US)
(74) Representative: IPLodge bv

(57) **Abstract**

A filter element has been disclosed comprising a media pack and a seal, the seal being directly or indirectly connected to the media pack in a sealing manner, the filter element comprising a longitudinal axis,
wherein the seal extends along a closed loop path around the longitudinal axis;
wherein the seal defines a predetermined sealing direction with respect to the longitudinal axis along the closed loop path;
wherein the predetermined sealing direction is not constant along the loop path;
wherein the seal comprises a first seal portion along the loop path wherein the predetermined sealing direction is generally outward and a second seal portion along the loop path wherein the predetermined sealing direction is generally inward; and wherein the predetermined sealing direction of the seal along the closed loop path remains parallel to a single plane perpendicular to the longitudinal axis.

## Description

### Technical field

The present disclosure relates to filter constructions for filtering fluids, such as liquids or gases, such as for instance air.

### Background art

Fluid streams can carry contaminant material such as dust and liquid particulate therein. In many instances, it is desired to filter some or all of the contaminant material from the fluid stream. For example, air flow streams to engines (for example combustion air streams) for motorized vehicles or for power generation equipment, gas streams to gas turbine systems and air streams to various combustion furnaces, carry particulate contaminant therein that should be filtered. It is preferred, for such systems, that selected contaminant material be removed from (or have its level reduced in) the air. A variety of fluid filter arrangements have been developed for contaminant removal. Typical fluids to be filtered are gases, as for instance air, or liquids such as fuel or oil.

Fluid filter arrangements typically comprise a filter housing and a replaceable filter element or filter cartridge arranged operatively therein.

An air filter element typically comprises an inflow face and an outflow face for inflow of dirty and outflow of cleaned air respectively, and comprises a seal arranged and adapted for sealing against an inner surface of the filter housing to thereby separate a dirty side comprising unfiltered or less filtered air from a clean side comprising filtered or more filtered air in the filter housing.

Often filter housings comprise or should preferably comprise reinforcement structures, flow guiding structures or other structures on the inner sidewall of the housing, which form obstacles for a straightforward sealing configuration. In other words, such obstacles reduce design freedom for the filter element, for instance for the one or more seals of the filter element.

Also, air filtration housings or air cleaners are mostly to be designed within a strict availably envelope, for instance defined within an engine compartment of a vehicle.

Improvements are sought.

### Summary of the disclosure

It is an objective of the present disclosure to provide a filter element according to claim 1, and to provide associated filter assemblies.

In a first aspect of the present disclosure, a filter element is disclosed comprising a media pack and a seal, the seal being directly or indirectly connected to the media pack in a sealing manner, the filter element comprising a longitudinal axis,
wherein the seal extends along a closed loop path around the longitudinal axis;
wherein the seal defines a predetermined sealing direction with respect to the longitudinal axis along the closed loop path;
wherein the predetermined sealing direction is not constant along the closed loop path;
wherein the seal comprises a first seal portion along the closed loop path wherein the predetermined sealing direction is generally outward (for instance radially outward) and a second seal portion along the loop path wherein the predetermined sealing direction is generally inward (for instance radially inward);
and wherein the predetermined sealing direction of the seal along the closed loop path preferably remains parallel to a single plane (e.g., an X-Y plane) perpendicular to the longitudinal axis.

The above features also provide the advantage that a larger degree of design flexibility is provided for filter elements, filter housings and filter assemblies. By embodying sealing surfaces in the housing and corresponding filter element sealing surfaces as more complex surfaces, beyond what is existing in the prior art, new filter housings can be conceived that are more compact or that can fit with other engine or vehicle components in a more compact manner. Also, these features allow providing new, alternative filter housings that may provide a better performance than existing housings. It also allows providing alternative filter elements that fit state of the art filter housings. It also allows the positioning of other housing components at locations of the filter housing where it was previously not possible to position them.

For instance, the manufacturing of filter elements comprising a seal can still be achieved while the filter element itself would comprise an obstacle such as a reinforcement rib, flow guiding feature, handle etc. Also, a filter element comprising a seal can be designed that can successfully seal on an inner wall of a housing which comprises a physical obstacle such as a reinforcement rib or flow guiding means. Even for housings that would allow a certain filter element to seal, alternative filter elements can be developed that provide an alternative sealing pattern for sealing against the inner wall of the housing, i.e., that seal against an alternative sealing surface of the inner wall of the housing.

Moreover, as the sealing direction does not comprise an axially directed component, no axial force is required to keep the seal compressed. In prior art solutions that comprise an axial component in the sealing direction, typically an axial seal is provided, which adds to the length of a filter element, and increases the variability of the length of a filter element in production.

It will be appreciated that for any filter element having a seal, a skilled person can determine a (preferential or intrinsic) seal direction of that seal for that element. The seal direction can thus be predetermined. It can be (pre)determined at any location along the seal path.

A seal direction can for instance be defined or recognized by the configuration of the filter element. It can at least partially or completely be derived from the relative location of the seal with respect to the media pack, e.g., with respect to the media pack's inflow and outflow faces. It can also at least partially or completely be derived from analyzing the presence and orientation of a support or reinforcement structure for the seal. It can be at least partially or completely derived by analyzing the thickness of the seal.

In embodiments of the present invention, the sealing direction is not constant and differs in at least two seal portions (longitudinal sections) along the loop path.

In embodiments of the present invention, the seal comprises a first seal portion along the loop path wherein the predetermined sealing direction is generally outward (generally away from the central portion or central axis of the filter element), for instance radially outward, and a second seal portion along the loop path wherein the predetermined sealing direction is generally inward (generally towards the central portion or central axis of the filter element), for instance radially inward.

Preferably, at any position along the loop path of the seal, only a single (only one) seal direction can be defined.

According to certain embodiments, the sealing direction of the seal along the closed loop path remains parallel or substantially parallel to a single plane, with deviations therefrom being smaller than 3° or smaller than 2° or smaller than 1°.

According to certain embodiments, the single plane (e.g., an X-Y plane) is perpendicular or substantially perpendicular to the longitudinal axis, with deviations therefrom being smaller than 3° or smaller than 2° or smaller than 1°.

The seal or seal is preferably path-connected, which means that a path can be drawn in the seal between every two points of the seal. Preferably the seal can comprise a single material or can be a composite seal made of different materials.

According to certain embodiments, the thickness of the seal can be constant along the loop path. According to other embodiments, the thickness of the seal can be variable along the loop path.

The media pack can for instance be a fluted media (also called z-type) media pack or a pleated media pack. The pleated media pack can be arranged in a planar manner (for instance in a panel filter) or in a tubular manner.

A fluted media pack typically comprises a plurality of flutes arranged between an inflow face and an outflow face of the media pack, wherein adjacent flutes are alternatingly closed at their inlet and outlet. An incoming air stream enters an open flute at the inflow face, which is closed at the outflow face, and is forced to pass through the filtration media of the wall separating the adjacent flutes. The filtered air then leaves the adjacent flute, which is closed at the inlet face, at the open side thereof, at the outflow face. Fluted filter elements are typically wound or manufactured by stacking fluted sheets. Fluted filter elements typically have a round, obround, elliptical, rectangular or square transversal cross-section.

A pleated media pack comprises a sheet of filtration media which is pleated to increase its filtration surface. It typically defines a virtual inflow and outflow face defined by the peaks and valleys of the pleats. A pleated media pack can for instance also be configured to replace an equivalent fluted media pack by arranging one or more pleated media sheets in a corresponding volume in a suitable manner. In such case the pleated media pack defines a virtual inflow and outflow face of the filter element. Pleated filter elements can for instance be planar ("panel filters") or can be tubular in nature. In the latter case, a pleated sheet of filtration media is wound such as to define a hollow tube.

A media pack typically comprises a first axial end defined by or (e.g., directly) adjacent to an inflow face and a second axial end defined by or (e.g., directly) adjacent to an outflow face.

Preferably, the longitudinal axis of the media pack corresponds to the longitudinal axis of the filter element.

According to certain embodiments, wherein the media pack is a stacked of wound fluted media pack or when the media pack is a pleated media pack arranged in a tubular manner, the seal is provided on or directly adjacent to a first end cap of the filter element, which is of the open type, at a first axial end of the media pack. At a second end of the media pack, the filter element can comprise a second end cap which can be of the open or closed type.

According to certain embodiments, the first seal portion and the second seal portion are connected by a bridging portion of the seal. At least a portion of the bridging portion is adapted and arranged for sealing in a tangential direction, the tangential direction being substantially perpendicular to a radial direction of the filter element. At least a portion of the bridging portion can comprise a single point or a single line (for instance parallel with the longitudinal axis of the filter element). In other embodiments, more than 50% or more than 75% or more than 80% of the bridging portion is adapted and arranged for sealing in a tangential direction.

When described in cylindrical coordinates (Θ, z, r), the bridge seal can extend in the r-direction having constant z and θ coordinates, whereby the sealing direction is perpendicular to the bridging portion.

According to certain embodiments, the seal comprises an axially extending portion, and the first seal portion is provided on a radially outer surface of the axially extending portion.

According to certain embodiments, the bridging portion comprises first and second connecting sections connecting the portion of the bridging portion which is adapted and arranged for sealing in a tangential direction with the first seal portion and the second seal portion respectively. These first and second connecting sections can be substantially parallel and lay in a plane that is at an angle with a plane perpendicular to the longitudinal axis, preferably at an angle within the range of 10 to 80 degrees.

According to certain embodiments, the seal reverses angular direction one or more times when following the seal along the closed loop path. For instance, the seal or sealing surface reverses angular direction for an even number of at least two times when following the seal along the closed loop path. In an alternative view, the sealing surface of the seal, when described in cylindrical coordinates (θ, z, r), comprises an even number of at least two sections wherein the evolution of θ is reversed when following the seal along the closed loop path.

According to certain embodiments, the seal comprises at least one axial step. For instance, a sealing surface of the seal, when described in cylindrical coordinates (Θ, z, r), comprises a generally constant z-coordinate, apart from one or more sections where the z-coordinate decreases and increases again, when following the seal along the closed loop path.

According to certain embodiments, the seal is at least partially, or completely, circumferential to the media pack. The seal can partially, or completely, surround the media pack.

According to certain embodiments, the length of one of the first and second seal portions is substantially larger than the length of the other one of the first and second seal portions. For instance, the length of the first seal portion can be equal to or larger than 1.5, 2, 3, 4, 5, 8, 10 times the length of the second seal portion. Alternatively, for instance, the length of the second seal portion can be equal to or larger than 1.5, 2, 3, 4, 5, 8, 10 times the length of the first seal portion.

In another view, the ratio between a length of the first seal portion and a length of the second seal portion (L(SP1)/L(SP2)) or the ratio between the length of the second seal portion and the length of the first seal portion (L(SP2)/L(SP1)) is equal to or larger than 1.5, or equal to or larger than 2 or 3 or 4 or 5 or 8 or 10.

This brings the advantage that it increases resistance of the seal configuration against leak formation. As the sealing directions of the first and second portion of the seal are in substantially opposite directions (inwardly versus outwardly), these portions could pull each other away from their sealing surfaces. Making one section substantially smaller than the other helps keep the seals in the correct position.

According to certain embodiments, the length of the first and second seal portions is the same or about the same. For instance, the ratio between a length of the first seal portion and a length of the second seal portion (L(SP1)/L(SP2)) or the ratio between the length of the second seal portion and the length of the first seal portion (L(SP2)/L(SP1)) lies within the closed range of 0.75 to 1.25, or within the closed range of 0.85 to 1.15, or within the closed range of 0.9 to 1.1.

The lengths of the first and second seal portions can be determined along their respective sealing surface.

According to certain embodiments, the filter element further comprises a support structure attached to the media pack in a sealing manner, wherein the seal is at least partially (or completely) supported by the support structure.

According to other embodiments, the media pack comprises a reinforced portion constituting a support structure for the seal, wherein the seal is at least partially supported by the support structure. This may be the case when the media, e.g., flutes of the media, has been reinforced by means of a material such as a resin or otherwise at a location adjacent to the seal.

According to other embodiments, the predetermined seal direction is defined as the normal direction of a respective portion of the support structure supporting the corresponding seal portion.

According to other embodiments, the support structure comprises a smooth, continuous, band surface that follows the seal, the band surface preferably corresponding to the closed loop path of the seal, such that for each section or portion of the seal, there is a corresponding portion of the band surface supporting it.

According to certain embodiments, at least one of the band portions corresponding to the first or the second seal portions preferably extends over a length of the closed loop path that is equal to or longer than 75%, or longer than 80% or longer than 90% of the length of the loop path. This occurs, for example, when the seal comprises only a single first seal portion along the loop path having a predetermined sealing direction generally outward and only a single second seal portion along the loop path wherein the predetermined sealing direction is generally inward.

According to certain embodiments, the band surface comprises a first portion and a different second portion along the closed loop path (longitudinal sections), corresponding to the first and second seal portions, defining a first and a second normal direction respectively. The first and second normal directions are respectively directed generally outwardly and inwardly.

At any position along the band surface, only a single (only one) normal direction can be defined.

According to certain embodiments, the normal direction of the support structure makes a continuous and preferably smooth transition (for instance in an intermediate portion) between the respective normal directions of the band surface portions corresponding to the first and second seal portions.

According to certain embodiments, the first, second and bridging seal portions of the seal are provided at or (preferably directly) adjacent to an axial end of the media pack.

According to certain embodiments, the first seal portion along the loop path is provided at or adjacent to a radially outwardly oriented portion of the media pack, for instance at or adjacent to its outer circumferential wall, and the second seal portion is provided at or adjacent to a radially inwardly oriented portion of the media pack, for instance at or adjacent to its inner circumferential wall.

According to certain embodiments, an axial projection of both the first seal portion and the second seal portion lies outside an axial projection of the media pack.

According to certain embodiments, the seal makes a smooth and continuous transition between respective seal directions of first, second and bridging seal portions.

According to certain embodiments, the seal direction in an intermediate seal portion between the first and the second portion of the seal makes a continuous and preferably smooth transition (for instance in an intermediate portion) between the respective seal directions of a first (or any first) and a second (or any second) portion of the (or any) at least two seal portions.

According to certain embodiments, the seal comprises or consists of polyurethane material, preferably foamed polyurethane material. The predetermined sealing direction of a polyurethane seal is typically the normal direction on its sealing surface. A polyurethane seal or endcap can be applied by using a mold. It is an advantage that polyurethane materials can be used that are flexible enough to allow demolding of cantilevered features or features that comprises an undercut portion.

According to certain embodiments, the predetermined seal direction is defined as the normal direction of a respective portion of the support structure supporting the corresponding seal portion.

According to certain embodiments, the support structure comprises a smooth, continuous, band surface that follows the seal. The band surface corresponds to the closed loop path of the seal. For each section or portion of the seal, there is a corresponding portion of the band surface supporting it. The predetermined seal direction of a portion of the seal is then defined as the direction defined by the normal on the corresponding portion of the band surface. For instance, the first and second seal portions of the seal correspond to the first and second portions of the support structure or smooth, continuous, band surface.

According to other embodiments, planar seal configurations wherein the entire seal extends along a single plane, for instance wherein an axial projection of both the first seal portion and the second seal portion lies outside an axial projection of the media pack, the seal can comprise a lip seal. The lip seal comprises a thermoplastic elastomer (TPE) or another flexible material suitable for providing the effect of sealing. Generally, the sealing direction of a lip seal on a filter element corresponds to the direction of the dominant component selected from the radial and axial components of the lip.

The lip seal comprises an elongated base, having a front and a back surface, and an elongated flexible lip structure or lip extending from the front surface of the base. The lip seal comprises a T-shaped transversal cross-section. The base is planar in nature and makes an angle with the lip. The angle is within the range of 30° to 90°, inclusive. The angle may be close to 90°, for instance within the range of 75° to 89°, inclusive. According to a certain embodiment, the lip forms an oblique angle with respect to the axis of the filter element in a direction towards the inlet face of the filter element or media pack. This "symmetry-breaking" bias of the lip seal causes the lip seal to move in the right direction in use, for the lip seal to be optimally resistant to a difference in air pressure to which it is typically exposed. According to certain embodiments, wherein the support structure comprises a smooth, continuous, band surface that follows the seal, the base of the lip seal is attached to the band surface. The lip seal is in direct or indirect contact with the band surface. The base of the lip seal is substantially parallel or parallel to the smooth, continuous, band surface that follows it. In such embodiments, the angle between the lip and the band surface corresponds to the angle between the lip and the base.

According to certain embodiments, the angle between the lip seal and the base is constant along the closed loop path. According to other embodiments, the angle between the lip seal and the base is not constant along the closed loop path.

According to certain embodiments, the lip seal comprises an elongated base having a front and a back surface, and a plurality of elongated flexible lip structures or lips arranged on and extending from the front surface of the base. The lips of the plurality of lips are arranged in parallel, i.e., they are parallel adjacent to the base as well as at locations away from the base. The lips of the plurality of lips have the same length, the length being measured radially between the base and the tip of the respective lip. The length of one or more lips is within the range of 1 to 15 mm, inclusive, and in certain embodiments within the range of 3 to 10 mm, inclusive. The lips of the plurality of lips form the same angle with the base at the same position along the closed loop path. The oblique angle between the parallel lips and the base of the lip seal is constant. The base is preferably applied to, or injection molded to the filter element.

Apart from a filter media pack and a seal, the filter element can comprise one or two end cap structures and/or a shell structure and/or a seal support structure. A shell is known to the skilled person and can be provided to cover and protect the outer surface of the media pack, to a partial or full axial extent. One or both end cap structures and/or the shell are typically attached to the media pack in a sealing manner. One or both end cap structures and/or the shell can comprise a seal support structure. The shell can be integrated and unitary with at least one of the end caps. The seal can be applied to different portions of the filter element. For instance, the seal can be applied completely to one of the end caps of the filter element. Alternatively, the seal can be applied completely to the shell of the filter element. In certain embodiments, the seal can be applied to the media pack of the filter element, the seal can be applied to the media pack of the filter element and to one of the end caps, and/or the seal can be applied to the shell of the filter element and to one of the end caps.

Generally, a seal is compressible or flexible in order to be able to adapt to a corresponding sealing surface. Generally, a support or reinforcement structure for a seal is substantially rigid or nondeformable when exposed to forces occurring during manipulation and installation of the filter element in a corresponding housing. Generally, the support or reinforcement structure of a seal is substantially less deformable and rigid than the seal it supports.

In certain embodiments, the material for forming the seal may be selected based on the desired Shore hardness of the resulting seal. In some embodiments, the seal has a Shore A value of at least 25, at least 30, at least 35, at least 40, at least 45, at least 50, at least 55, or at least 60. In some embodiments, the seal has a Shore A value of up to 40, up to 45, up to 50, up to 55, up to 60, up to 65, up to 70, up to 75, up to 80, up to 85, or up to 90. In an exemplary embodiment, the seal has a Shore A value in a range of 30 to 90. In another exemplary embodiment, the seal has a Shore A value in a range of 40 to 70. In yet another exemplary embodiment, the seal has a Shore A value in a range of 50 to 70. In some embodiments, the Shore A value is determined as described in ASTM D2240-15e1, entitled "Standard Test Method For Rubber Property- Durometer Hardness.".

In some embodiments, the seal support or reinforcement structure has a Shore A value of at least 50, at least 60, at least 70, at least 80, or at least 90. In some embodiments, the seal support or reinforcement structure has a Shore A value of up to 80, up to 90, up to 95, or up to 100. In an exemplary embodiment, the seal support or reinforcement structure has a Shore A value in a range of 60 to 100. In another exemplary embodiment, the seal support or reinforcement structure has a Shore A value in a range of 70 to 100. In yet another exemplary embodiment, the seal support or reinforcement structure has a Shore A value in a range of 80 to 100. In some embodiments, the Shore A value is determined as described in ASTM D2240-15e1.

In some embodiments, the seal support or reinforcement structure has a Shore D value of at least 10, at least 15, at least 20, at least 25, or at least 30. In some embodiments, the seal support or reinforcement structure has a Shore D value of up to 80, up to 90, up to 95, or up to 100. In an exemplary embodiment, the seal support or reinforcement structure has a Shore D value in a range of 15 to 100. In another exemplary embodiment, the seal support or reinforcement structure has a Shore D value in a range of 30 to 100. In some embodiments, the Shore D value of the seal support or reinforcement structure is determined as described in ASTM D2240-15e1.

In a second aspect of the present disclosure, a filter assembly is disclosed comprising a housing and a filter element according to any of the embodiments of the first aspect operably held within the housing, wherein the housing comprises a predetermined sealing surface for receiving the seal along the closed loop path, the sealing surface being complementary to the seal having a non-constant predetermined sealing direction.

According to certain embodiments, the distance between the predetermined sealing surface of the housing for receiving the seal along the closed loop path and the smooth, continuous, band surface of the support structure that follows the seal is kept constant along the closed loop path.

This provides the advantage that the seal will exhibit the same amount of compression (e.g., for a polyurethane seal) or the same or about the same direction of deflection and amount of deflection (e.g., for a lip seal) along the closed loop path, making the sealing connection between seal and housing wall more robust.

The predetermined sealing surface is such that it can cooperate with the seal in order to separate a clean air area from a dirty air area within the housing.

According to certain embodiments, the housing comprises an internal sealing surface which forms a continuous closed loop path (i.e., it defines a single loop or band).

Features and advantages disclosed for one of the above aspects of the present disclosure are hereby also implicitly disclosed for the other aspects, mutatis mutandis, as the skilled person will recognize.

### Brief description of the drawings

The accompanying drawings, which are incorporated in and constitute a part of the description, illustrate several aspects of the present disclosure.
Fig. 1 (a) (b), Fig 2 (a) (b) and Fig. 4 (a) (c) are perspective views of a first embodiment of the present disclosure. Fig. 4 (b) is a perspective cut view.
Fig. 3 illustrates the aspect of interaction of an element according to the first embodiment with a housing.
Fig. 5 (a) illustrates a filter element according to a second embodiment of the present disclosure. Fig. 5 (b) and Fig. 6 illustrate the aspect of possible interactions of the filter element with a filter housing.
Fig. 7 (a) (b) are perspective views of a filter element according to a third embodiment of the present disclosure. Fig. 8 (a) (b) are perspective views of the filter element according to a fourth embodiment, similar to the third embodiment.
Fig. 9 (a) is a side cut view of a filter element of Fig. 8(a) (b) in an associated housing of the front load type, illustrating the aspect of interactions of the filter element with a filter housing. Fig. 9(b) is a cut view of the internal configuration of the associated housing.
Fig. 10 (a) (b) and Fig. 11 (a) (b) illustrate the aspect of interaction of a filter element according to Fig. 8 (a) (b) or Fig. 7 (a) (b) with an associated housing of the side load type. Fig. 11(b) illustrates details of the housing outlet.
Fig. 12 illustrates a fifth embodiment according to the present disclosure, in two variants.
Fig. 13 illustrates a filter element according to a sixth embodiment. Fig. 14 illustrates the interaction of the filter element of Fig. 13 with an associated filter housing.
Fig. 15 (a) (b) are perspective views of a filter element according to a seventh embodiment of the present disclosure. Fig. 16 and Fig. 17 (a) (b) and (c) illustrate the interaction of the filter element of Fig. 15 (a) (b) with an associated filter housing 10.
Fig. 18 (a) (b) are respectively a top view and a perspective view of an eighth embodiment of the present disclosure.
Fig 19 (a) (b) are respectively a top view and a perspective view of a ninth embodiment of the present disclosure. Fig. 20(a) is a variant thereof. Fig. 20(b) illustrates a returning detail of these embodiments.
Fig. 21 illustrates the concept of a cylindrical coordinate system which has been used in describing certain aspects of the present disclosure.

### Detailed description

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

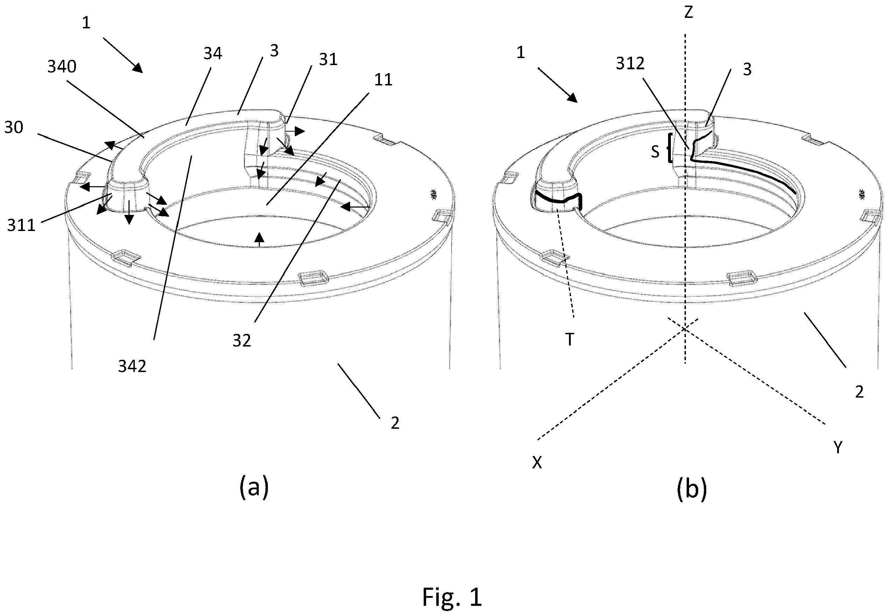

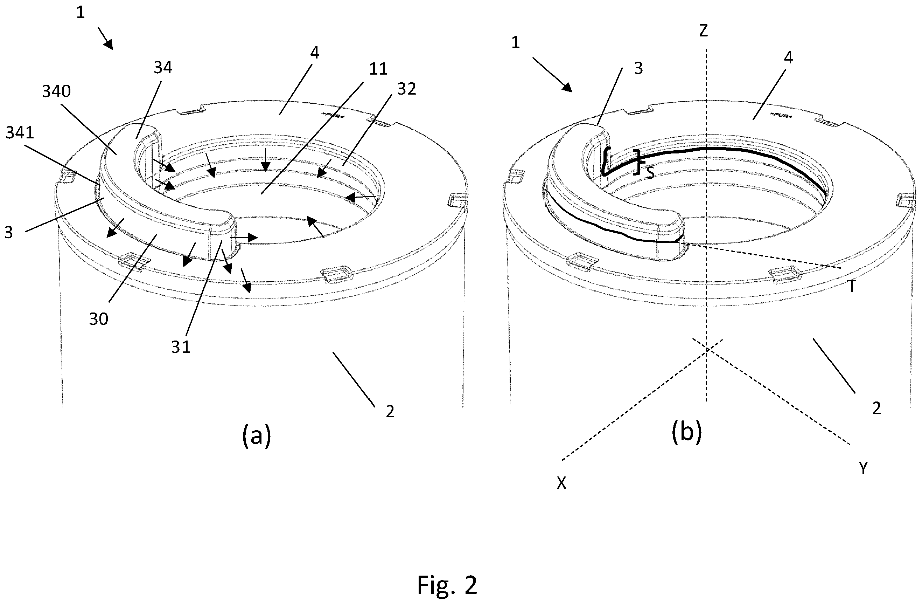

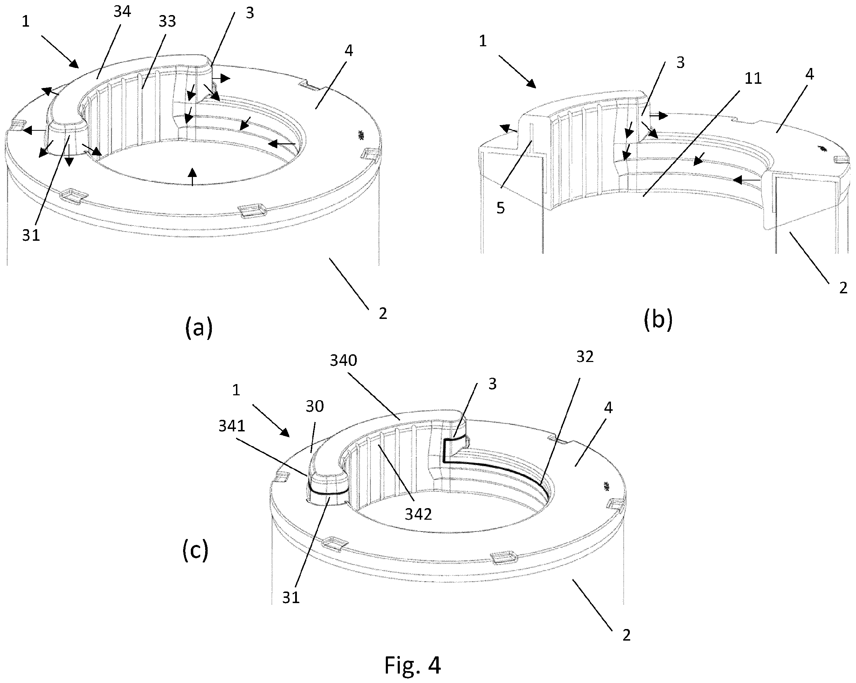

Fig. 1 (a) (b), Fig 2 (a) (b) and Fig. 4 (a) (c) are perspective views of a first embodiment of the present disclosure. Fig. 4 (b) is a perspective cut view. The images of Fig. 1 (a) and Fig. 1 (b) are identical but have complementary marking. The same applies to Fig.2(a) and Fig.2(b) and to Fig. 4(a) and Fig. 4(c).

Filter element 1 comprises a media pack 2 and a seal 3, the seal being directly or indirectly connected to the media pack in a sealing manner. The media pack is a pleated media pack arranged in a tubular manner. At a first end of the media pack 2, a first end cap 4 of the filter element 1 is provided in a sealing manner. The seal can comprise or consist of a polyurethane material, such as a foamed polyurethane material. The first end cap 4 can comprise or consist of a polyurethane material, such as a foamed polyurethane material. The first end cap 4 and the seal can be made of a single material. Alternatively, the end cap 4 can comprise a hard plastic material, to which a seal 3, for instance a polyurethane or polyurethane comprising seal 3 is attached in a sealing manner. The end cap 4 can further comprise a support structure for the seal 3, for instance made from, and in certain embodiments unitary with, the hard plastic material of the end cap 4.

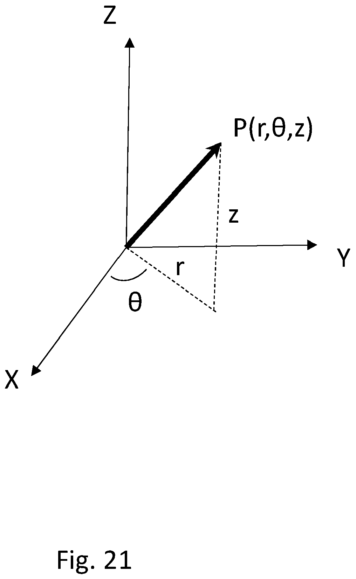

The filter element comprises a longitudinal axis, marked as a Z-axis in the drawing. Orthogonal axes X and Y are also depicted as they are used in the description of certain aspects of the present disclosure. Reference is also made to Fig. 21 which illustrates the well-known concept of cylindrical coordinates.

The seal 3 extends along a closed loop, defining a closed loop path, around the longitudinal axis Z. The seal defines a predetermined sealing direction with respect to the longitudinal axis along the closed loop path. The sealing surface of the seal is generally marked in a dark black line, such as for instance in Fig. 1 (b), Fig. 2(b) and Fig. 4(c).

The predetermined sealing direction is not constant along the closed loop path and is marked by small black arrows at different instances along the sealing surface.

The seal 3 comprises a first seal portion 30 along the closed loop path wherein the predetermined sealing direction is generally outward and a second seal portion 32 along the closed loop path wherein the predetermined sealing direction is generally inward. Hereby, the predetermined sealing direction of seal 3 along the closed loop path remains parallel to a single plane, mapped as the X-Y plane, which lies perpendicular to the longitudinal axis Z.

The seal 3 comprises an axially protruding portion 34 having an axial end face 340. The radially outer surface of the axially protruding portion 34 comprises the first portion 30 of seal 3. The end cap 4 is open, having a central outlet opening 11, and comprises an inwardly directed radial seal portion of the seal 3, corresponding to the second seal portion 32.

The first seal portion 30 and the second seal portion 32 are connected by a bridging portion 31 of seal 3. At least a portion of the bridging portion 31 is adapted and arranged for sealing in a tangential direction T, the tangential direction being substantially perpendicular to a radial direction of the filter element 1. For instance, when described in cylindrical coordinates (θ, z, r), a portion of the bridging portion 31 extends in the r-direction having constant z and θ coordinates and the sealing direction is perpendicular to the bridging portion 31. For instance, 30% or more or 50% or more of the sealing surface of the bridging portion is adapted and arranged for sealing in a tangential direction T.

In some embodiments, the bridging portion may only comprise a small area (single point) or line having a sealing direction being tangential, for instance if the bridging portion 31 would comprise a rounded or U-shaped profile in a projection on the X-Y plane.

The respective bridging portions 31 comprise first and second connecting sections 311, 312 connecting the portion of the bridging portion which is adapted and arranged for sealing in a tangential direction with the first seal portion 30 and the second seal portion 32 respectively. The first and second connecting sections 311, 312 extend laterally on the axially protruding portion 34 of the end cap 4. Here, the first and second connecting sections 311, 312 are substantially parallel. As explained further on, the second connection section 312 also comprises a step in the Z-direction towards the center of the filter element 1.

The seal 3 (or sealing surface) reverses angular direction one or more times, here two times, when following the seal 3 along the closed loop path. In other words, the seal (or sealing surface) makes a step back in the angular direction one or more times, when following the seal 3 along the closed loop path. This may further be described using cylindrical coordinates (Θ, z, r) where the seal 3 (or sealing surface) comprises an even number of at least two sections wherein the evolution of θ is reversed when following the seal along the closed loop path.

The seal 3 (or sealing surface) comprises at least one axial step S. When described in cylindrical coordinates (θ, z, r), the seal or sealing surface of the seal 3 comprises a generally constant z-coordinate (generally lies in a single plane), apart from one or more sections where the z-coordinate decreases, possibly remains at a different constant value, and then increases again, when following the seal along the closed loop path. This may define a step S of the seal towards the central portion of the filter element 1. As described before, the bridging portion 31 can comprise a corresponding step portion.

The ratio between the length of the second sealing portion 32 and the length of the first sealing portion (L(SP2)/L(SP1)) is equal to or larger than 2. In other words, the second sealing portion 32 is twice or more than twice the length of the first sealing portion 30.

The filter element can optionally comprise a seal support structure 5 (often not depicted as it is typically embedded into the seal 3) attached to the media pack 2 in a sealing manner, wherein the seal 3 is at least partially (or completely) supported by the support structure 5. Alternatively, the media pack comprises a reinforced portion constituting a seal support structure 5 for the seal 3, wherein the seal 3 is at least partially supported by the seal support structure 5.

The embodiment illustrated in Fig. 4(a) (b) and (c) differs only in that ribs or grooves or similar structures 33 are provided on a radially inner surface 342 of an axially extending portion 34 of the seal 3, such that this surface can not be used as sealing surface and making sealing mandatory in the radially outer surface 341 of the axially extending portion 34.

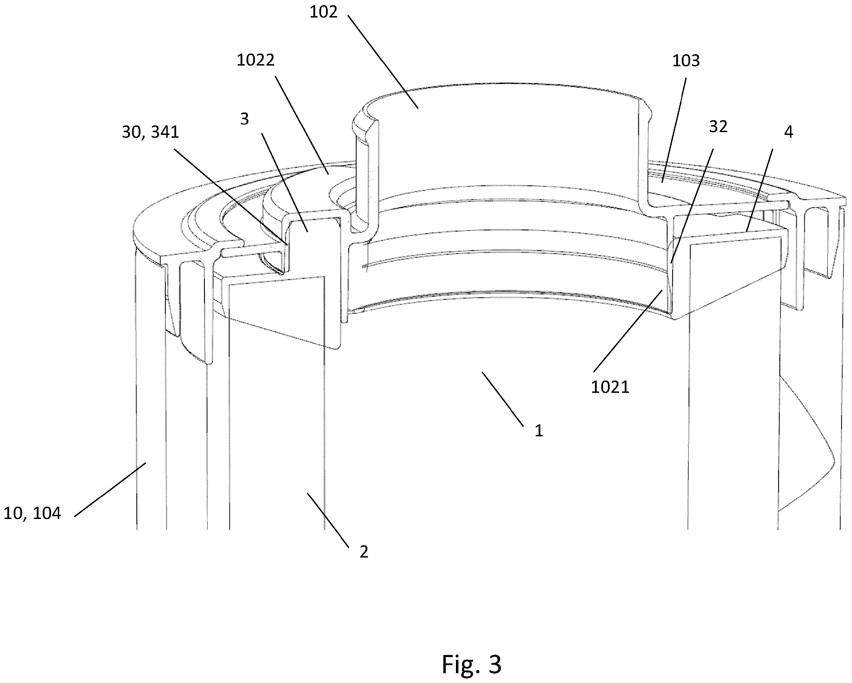

Fig. 3 illustrates the aspect of interaction of an element 1 according to the first embodiment with a housing 10. A filter element is connected to a housing outlet 102, which comprises an outlet tube 1021. Further, the housing outlet 102 on the housing cover 103 comprises a seal receiving recess 1022 for receiving the axially extending portion 34 of the seal. The first seal portion 30, defined by the outer surface 341 of the axially extending seal portion 34 seals against the inside of the radially outer wall of the recess 1022. The second seal portion 32 seals against the outer surface of the outlet tube 1021. At the lateral, short sides of the recess 1022 the seal 3 comprises a bridge portion 31 as described, providing a continuously sealing (to the housing) intermediate portion of the seal 3 connecting the first and second seal portions 30, 32.

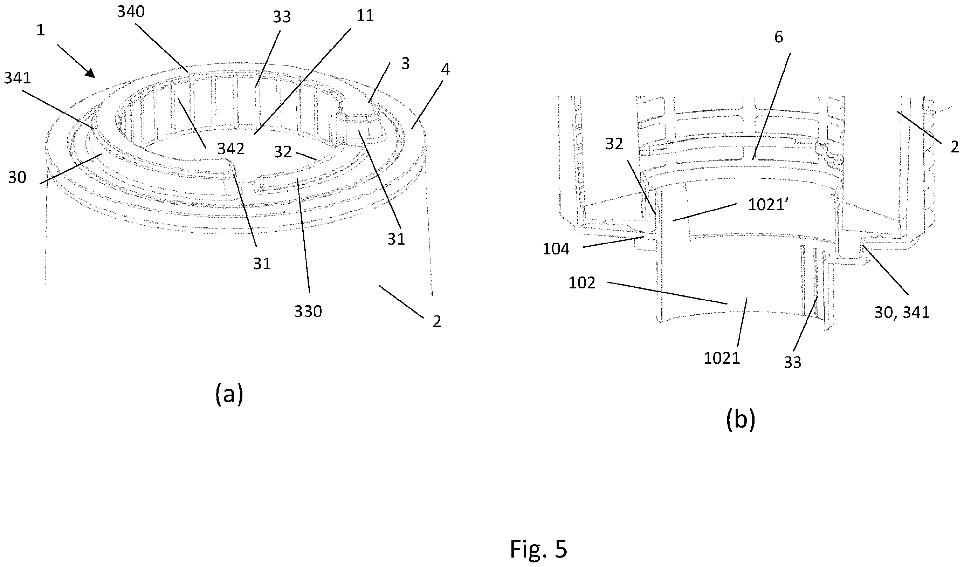

Fig. 5 (a) illustrates a filter element according to a second embodiment of the present disclosure. This embodiment is similar to the first embodiment, and only the differences with the first embodiment are described below.

In this embodiment, axially extending portion 34 of the seal 3 is longer than in the first embodiment, as it circumscribes the outlet opening 11 for about 270 degrees. The ratio between the length of the first sealing portion 30 and the length of the second sealing portion 32 (L(SP1)/L(SP2)) is about 3, i.e., larger than 2. In other words, the first sealing portion 32 is about three, or more than twice, the length of the second sealing portion 30. Further, towards the short lateral sides of the axially extending portion 34 of the seal 3, the width of the bridging portion 31 increases slightly, when measured along a plane parallel to the X-Y plane. This is an optional feature, but can be beneficial as it increases the robustness of the seal locally in this region where both inwardly directed and outwardly directed forces are applied to seal 3 in use. Also, the end cap 4 may comprise at its axial end surface and in between the two bridge portions 31, a distance keeper structure 330 that would necessitate sealing by means of the second sealing portion 32, as the distance keeper structure is adapted and arranged to allow air to pass through it or in between the distance keeper structure and the respective bridge portions 31.

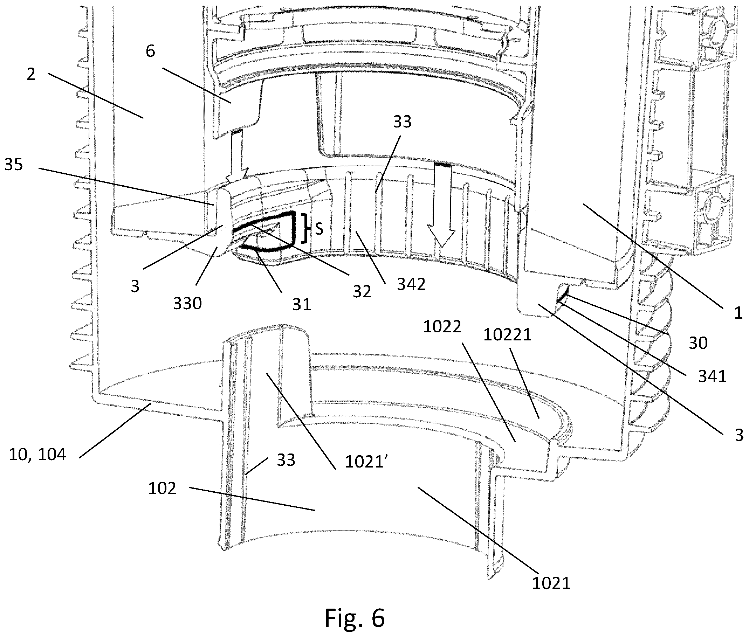

Fig. 5 (b) and Fig. 6 illustrate the aspect of possible interactions of the filter element 1 with a corresponding filter housing 10. While in relation to the first embodiment, an interaction with a housing cover 103 has been described, in this embodiment the open end cap 4 of the filter element 1 interacts with an outlet tube 1021 of an outlet 102 of a main housing body 104. The main housing body 104 comprises an inner volume and is adapted for receiving the filter element 1 in said inner volume. The generally closed end face, apart from the outlet opening, of the main housing body comprises outlet 102 formed by the outlet tube 1021. The end face comprises a circumferential step or circumferential recess 1022 for receiving the axially extending portion 34 of the seal 3, which seals radially outwardly by means of the first seal portion 30 against the sidewall 10221 of the recess 1022. The outlet tube further comprises an axially inwardly extending portion 1021', which has a limited angular extent of for instance about 45 degrees. The second sealing portion 32 is arranged and adapted for sealing radially inwardly onto the axially inwardly extending portion 1021'. Respective bridge portions 31 provide a sealing path that connects the first and second seal portions 30, 32 as described before, by making a step S in the Z-direction. It is noted that seal 3, and the associated sealing surface which is indicated in continuous black line in Fig. 6, makes an axial step S and also reverses angular direction in each of the two bridge portions 31. The seal 3 and associated sealing surface thus reverses angular direction two times in every bridging portion 31 when following the seal along the closed loop path.

Hereby, the predetermined sealing direction of seal 3 along the closed loop path remains parallel to a single plane, mapped as the X-Y plane, which lies perpendicular to the longitudinal axis Z.

The filter element or filter assembly further comprises an inner liner 6 for the media pack 2, which can be removable. Fig. 5(b) illustrates the filter element 1 and liner 6 in installed state. Fig. 6 illustrates the optionally separate introduction of the filter element 1 and the liner 6 into the housing 10 (see white arrows). At least a part of a lower rim of a conical or cylindrical liner structure 6, which is typically more rigid than the seal 3, is received by an at least partial or completely circumferential recess or groove 35 in the seal 3, reinforcing the seal 3. The recess or groove 35 opens in an axially inward direction and is provided in a radially inwardly extending portion of the seal 3, for instance at least in the region in between the bridging portions 31 of the seal 3 where there is no axially extending portion 34 of the seal 3.

At various locations, recesses or ribs 33 can be provided in order to not allow alternative sealing surfaces of the housing to be used, such as for instance at the inner surface of the outlet tube 1021, and/or the radially inner surface of the axial extension 1021' and/or at the inner surface 342 of the axially extending portion 34 of the seal 3.

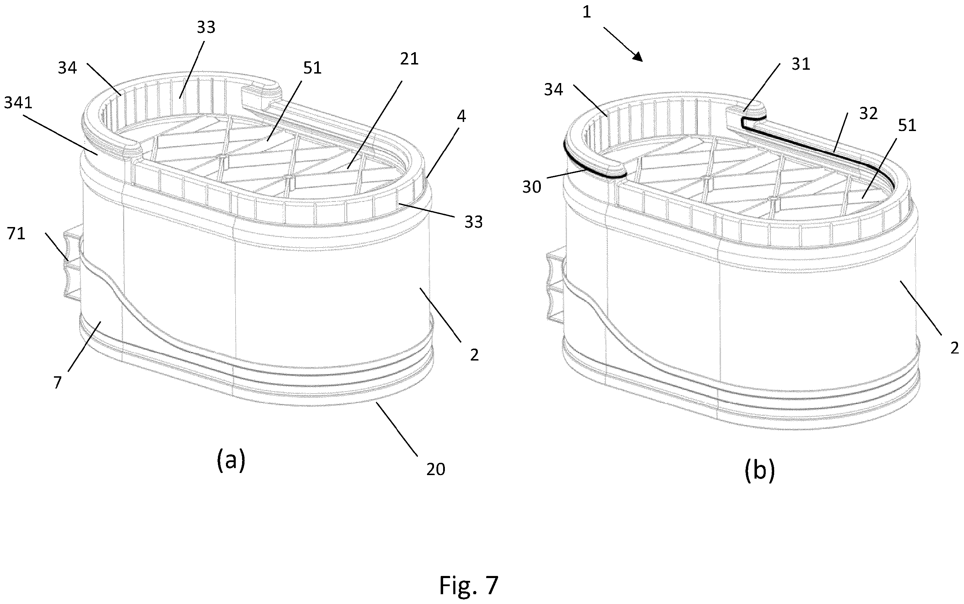

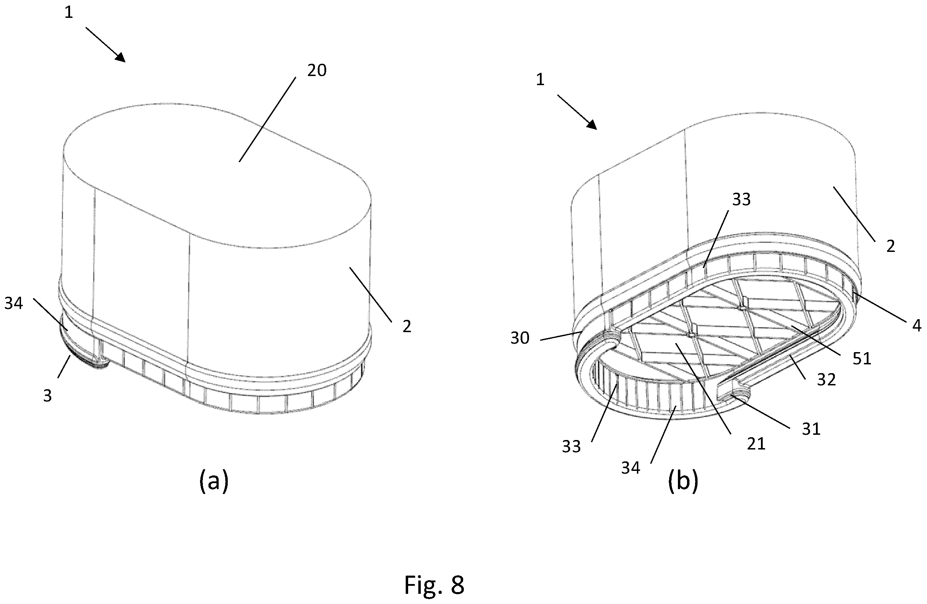

Fig. 7 (a) (b) are perspective views of a filter element according to a third embodiment of the present disclosure. Fig. 8 (a) (b) are perspective views of the filter element according to a fourth embodiment, similar to the third embodiment. Both the third and fourth embodiments relate to an equivalent seal 3, seal path and sealing surface as described for the first and second embodiments, which are applied at or on an outflow face 21 (or inflow face 20, as inflow and outflow can be exchanged) of a fluted media pack 2, for instance a wound fluted media pack 2.

The seal 3 circumscribes the outflow face 21 of the media pack 2 and extends axially therefrom. The filter element also comprises an optional seal support structure 5, which is made of a hard plastic material and supports the seal 3. The seal support 5 is glued to the media pack 2 and/or can be attached to the media pack 2 by the material which also forms the seal 3. The seal support structure 5 may also comprise an open support grid 51 which is arranged directly adjacent or lies against the outflow face 21 of the wound media pack 2, to avoid telescoping of the media 2 when subject to a pressure difference between inflow and outflow face 20, 21. The media pack 2 has an obround cross-section but can be for instance cylindrical or can have other shapes. The seal comprises two parallel straight sections which are connected by two curved sections. At one of the curved sections, seal 3 comprises an axially extending portion 34 (extending further away from the outflow face 21 than the rest of the seal 3). Fig. 7(b) illustrates the loop path of the seal 3 or sealing surface in relatively thick black line. The first seal portion 30, which is adapted and arranged for sealing radially outwardly, is embodied by the radially outer surface 341 of the axially extending seal portion 34. The second seal portion 32, which is adapted and arranged for sealing radially inwardly, is embodied by the inner surface of the two straight sections of the seal 3 and the curved section opposite the axially extending seal portion 34 which connects the two straight sections. Bridging seal portions 31 are provided at both longitudinal ends of the axially extending portion 34, which connect the first and second seal portions 30, 32 in the same way as described for the previous embodiments. It is noted that also here, seal 3, and associated sealing surface, makes an axial step S and also reverses angular direction twice in each of the two bridge portions 31. The seal 3 and associated sealing surface thus reverses angular direction four times when following the seal 3 along the closed loop path.

The predetermined sealing direction of seal 3 along the closed loop path remains parallel to a single plane, mapped as the X-Y plane, which lies perpendicular to the longitudinal axis Z.

At the inflow face 20 of the filter element comprises a second end cap 7 which is directly or indirectly connected to the inflow face 20 in a sealing manner. The second end cap is preferably made of a hard plastic material and serves as a protection for the second end of the media pack 2 during handling and installation. The second end cap can further comprise a handle structure 71, which can for instance also be used for keeping the filter element 1 better in position in the housing 10, for instance by interacting with a locking feature of a housing cover 103.

The fourth embodiment of Fig. 8 (a)(b) differs from the third embodiment only in that the filter element 1 does not comprise a second end cap 7.

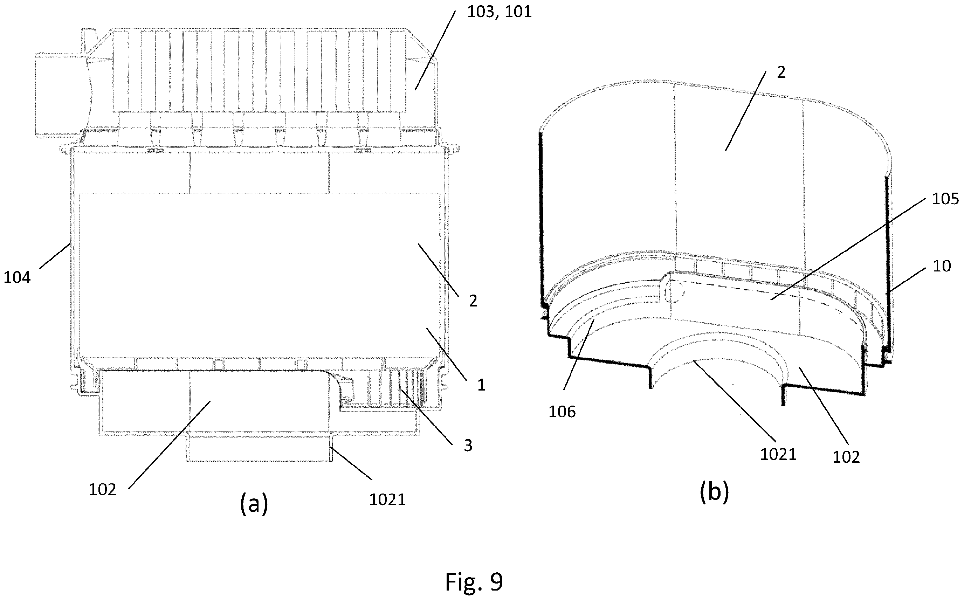

Fig. 9 (a) is a side cut view of a filter element of Fig. 8(a) (b) in an associated housing 10 of the front load type, illustrating the aspect of interactions of the filter element 1 with a filter housing 10. Fig. 9(b) is a cut view of the internal configuration of the associated housing 10. In such configurations, the filter element 1 can be inserted into the housing 10 by a linear translation movement.

Housing 10 comprises a housing main body 104 which can receive the filter element 1 by means of an opening covered by a cover 103. It comprises the housing cover 103 which serves as an inlet and comprises for instance an arrangement of precleaner tubes which are adapted for filtering out relatively large particles from an incoming airstream by introducing swirl and making use of the induced centrifugal force on contaminant particles. The housing 10 comprises a housing outlet 102. The filter element 1 seals against the housing 10 near the housing outlet 102 or at the housing outlet side of the housing 10. Therefore, housing 10 comprises a sealing surface 105 to which the second seal portion 32 seals in a (radially) inward direction (sealing surface marked in dashed line in Fig. 9(b)). A complementary sealing surface 106 is provided in the housing 10 against which the first seal portion 30 seals radially outwardly, as well as a further sealing surface against which the respective bridging portions 31 can seal.

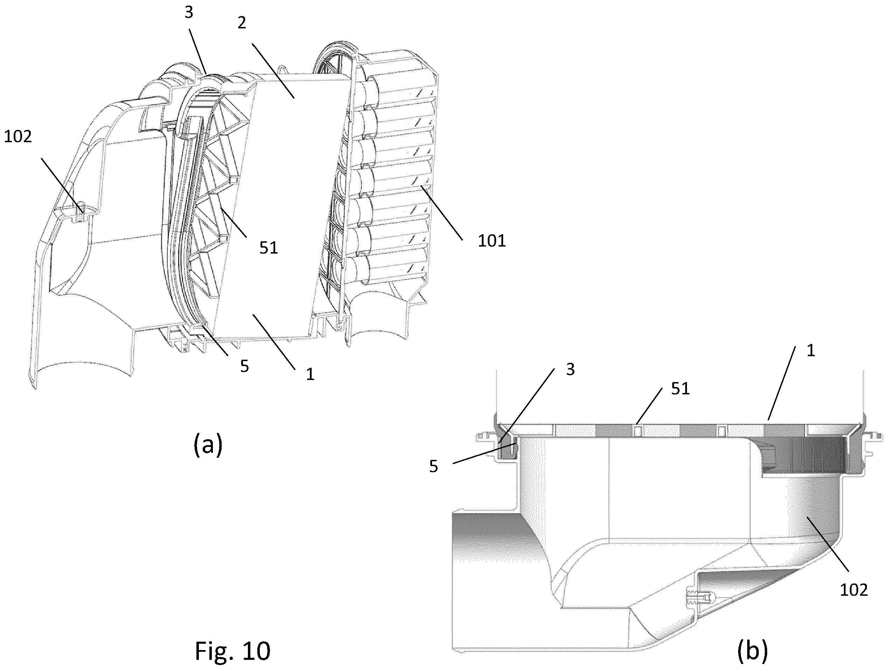

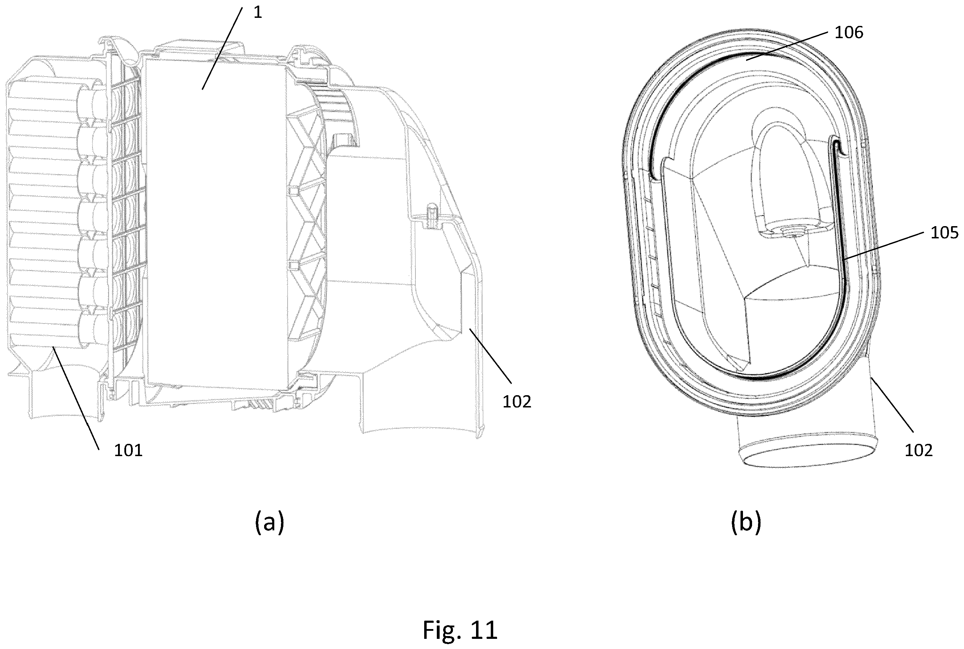

Fig. 10 (a) (b) and Fig. 11 (a) (b) illustrate the aspect of interaction of a filter element 1 according to Fig. 8 (a) (b) or Fig. 7 (a) (b) with an associated housing 10 of the side load type. In such configurations the housing 10 can be opened laterally by opening the cover 103 arranged laterally and the element is inserted from a side of the filter housing 10. In such configurations, the filter element 1 has to be inserted under an angle and needs to be tilted about a pivot point to install the filter element 1 into the housing 10. The filter element 1 is installed between housing inlet 101, for instance comprising an arrangement of precleaner tubes, and the housing outlet 102. The housing outlet 102 and housing inlet 101 are connected by a main housing part 104 (not depicted). Housing 10 adapted and arranged such that the filter element 1 seals against the housing outlet 102. Fig. 11(b) illustrates in relatively thicker lines the surfaces 105 and 106 of the outlet 102 against which respectively the second and the first seal portions 32, 30 seal.

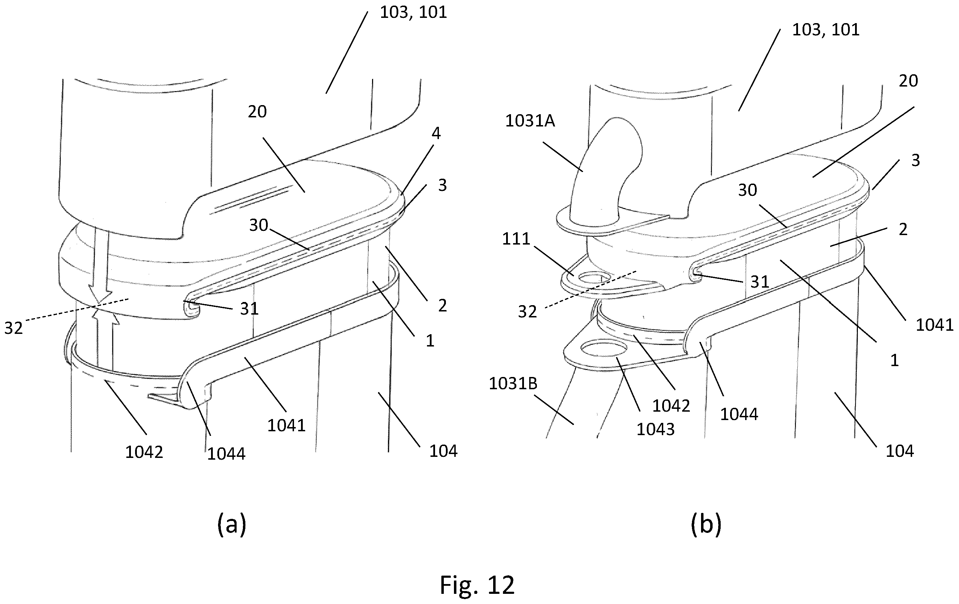

Fig. 12 illustrates a fifth embodiment according to the present disclosure, in two variants (a) and (b). In the embodiment of Fig. 12(a), the filter housing 10 comprises a main housing body 104 which receives a filter element 1 through a filter servicing opening. A housing cover 103 closes the housing 10 and serves as housing inlet 101. The filter element 1 comprises a wound fluted media pack 2, and a seal 3 as claimed is provided adjacent to its inflow face 20. The media pack 3 has an obround cross-section but other configurations are also possible. The seal 3 surrounds the outer surface of media pack 2 and is, for instance, flat with the inflow face 20. Seal 3 comprises a first seal portion 30 (marked with a dashed line) that seals in an outward direction against a partially circumferential wall 1041 partially defining the servicing opening. The seal 3 comprises a second seal portion 32 (not visible) that seals inwardly against a second partially circumferential wall 1042 that partially defines the servicing opening (sealing surface on the wall 1042 illustrated in dashed line). The seal 3 comprises two hinging portions 31 connecting the first seal portion 30 and second seal portion 32. A corresponding connection portion 1044 of the housing 10 is provided, that preferably also partially defines the servicing opening. The servicing opening is thus preferably defined by the complementary portions 1041, 1042 and 1044 which define a sealing surface for the seal 3. Also here, the predetermined sealing direction of seal 3 along the closed loop path remains parallel to a single plane, mapped as the X-Y plane, which lies perpendicular to the longitudinal axis Z.

The embodiment of Fig. 12(b) is generally identical to that of Fig. 12(a) but makes optimal use of the claimed seal configuration. A flange 111 that may be of the same material of the seal is provided radially extending from the filter element 1 adjacent to a location of the second seal portion 32, and radially outside of the closed loop path. The flange can for instance comprise a through hole that aligns with a through hole of a radially extending flange 1043 of the main filter housing body 104 that is connected with a second part of a by-pass or scavenging tube 1031B. Cover 103 comprises the first part of the by-pass tube or scavenging tube 1031A. Flange 111 can then serve as a sealing connector piece (on itself or by means of an extra sealing means or seals arranged on it) for the bypass or scavenging tube parts 1031A and 1031B. It will be appreciated by the skilled person that such a functionality would be more difficult to achieve with for instance a standard fluted media filter element having a single radially outward sealing seal. It is an advantage of this embodiment that the bypass or scavenging tube comprises two separate parts 1031A and 1031B, the first part 1031A being connected to and integrated into the cover 103 or inlet portion 101. This simplifies the typically required manipulation and removal of a scavenging tube during servicing in the prior art.

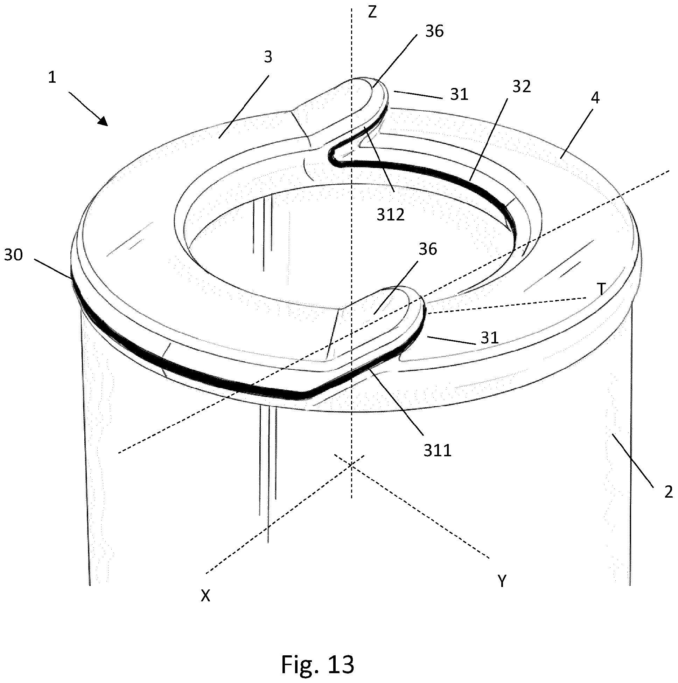

Fig. 13 illustrates a filter element 1 according to a sixth embodiment. Filter element 1 comprising a pleated media pack 2, comprising pleated media arranged in a tubular manner. At a first axial end of the media pack 2, an end cap 4 is provided, comprising or consisting of for instance polyurethane such as foamed polyurethane that is suitable for use as a sealing material. Optionally the end cap 4 comprises a support structure that is more rigid than the material of the seal, for instance made from a relatively hard plastic, supporting the softer polyurethane seal 3. The seal is directly or indirectly connected to the media pack 2 in a sealing manner. The filter element comprises a longitudinal axis Z. The seal 3 and associated sealing surface (marked as relatively thicker lines) extends along a closed loop path around the longitudinal axis Z. The predetermined sealing direction of seal 3 is not constant along the loop path. The seal 3 comprises a first seal portion 30 along the loop path wherein the predetermined sealing direction is generally outward, corresponding to the radial outer surface of the end cap 4, and a second seal portion 32 along the loop path wherein the predetermined sealing direction is generally inward, corresponding to a radially inwardly oriented surface of the end cap 4. In projection along the Z-direction, both seal portions lie outside a projection of the media pack 2; the projection of the second seal portion 32 lies inside the projection of the media pack 2. The projection of the first seal portion 30 lies outside of the projection of the media pack 2. The predetermined sealing direction of the seal along the closed loop path remains parallel to a single plane (XY) perpendicular to the longitudinal axis. The first seal portion 30 and the second seal portion 32 are connected by two bridging portions 31 of seal 3. The bridging portions 31 are arranged as protruding portions 36 that extend over a predetermined distance away from the rest of the end cap 4, under an angle with a plane perpendicular to the longitudinal axis Z, preferably at an angle within the range of 10 to 80 degrees, inclusive, more preferably at an angle within the range of 25 to 65 degrees, inclusive. The longitudinal axes of these protrusions 36 are further generally tangential to a radial direction of the media pack 2.

At a single location of each of the bridging portions 31, the sealing direction is in a tangential direction, the tangential direction being substantially perpendicular to a radial direction of the filter element 1. Each bridging portion comprises first and second connecting sections 311, 312 connecting the portion of the bridging portion 31 which is adapted and arranged for sealing in a tangential direction with the first seal portion 30 and the second seal portion 32 respectively. The first and second connecting sections 311, 312 are substantially parallel and lay in a plane that is at an angle with a plane perpendicular to the longitudinal axis, preferably at an angle within the range of 10 to 80 degrees, inclusive, more preferably at an angle within the range of 25 to 65 degrees, inclusive.

The seal 3 reverses angular direction two times when following the seal along the closed loop path.

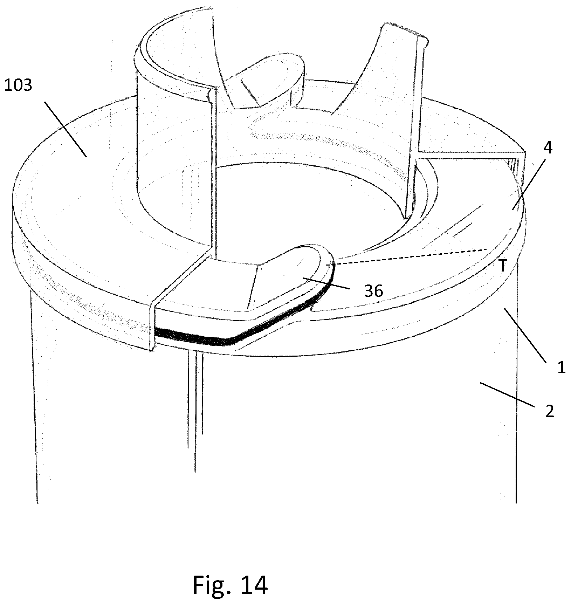

Fig. 14 illustrates the interaction of the filter element of Fig. 13 with an associated filter housing. The angled protrusions 36 can serve as alignment features with respect to a housing cover 103. It is an advantage that a housing portion such as a housing cover 103 which is suitable for sealing against a claimed seal 3 along the loop path of the respective filter element 1, will not be able to provide sealing for a standard, and thus wrong filter element.

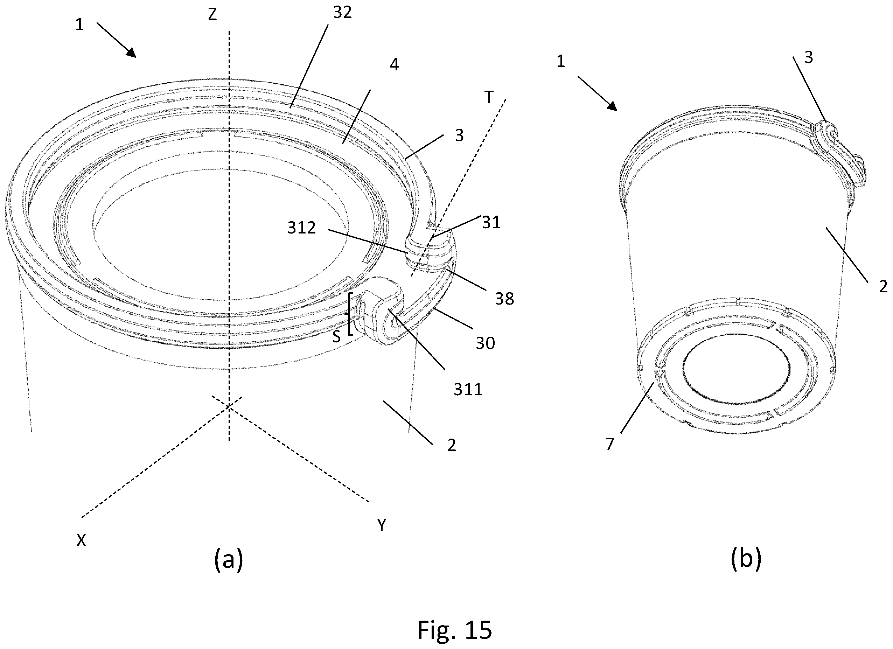

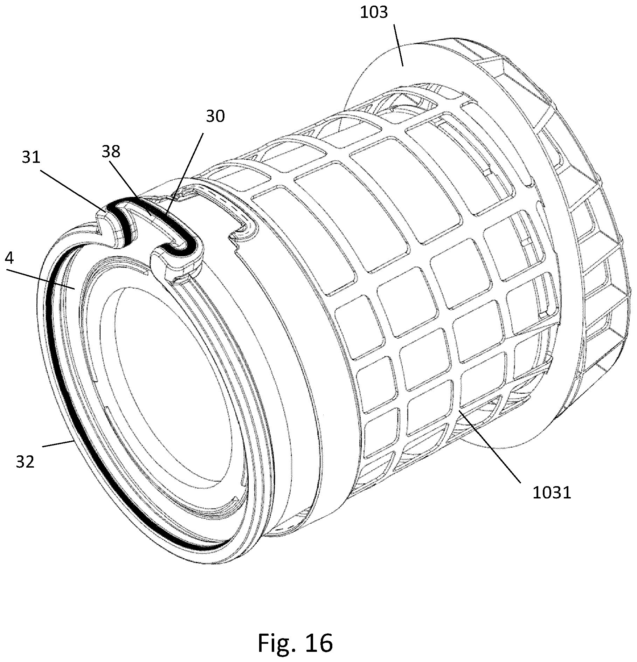

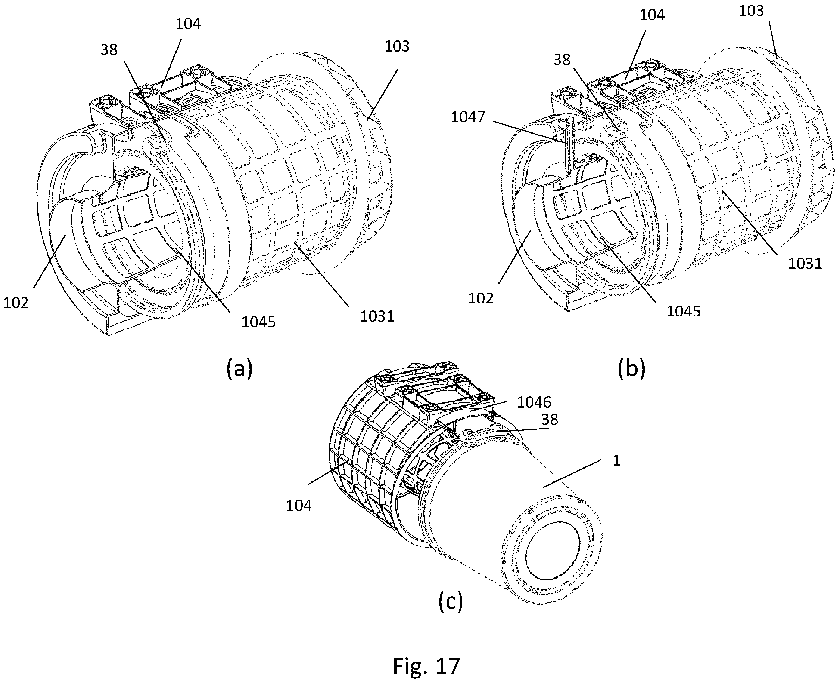

Fig. 15 (a) (b) are perspective views of a filter element 1 according to a seventh embodiment of the present disclosure. Fig. 16 and Fig. 17 (a) (b) illustrate the interaction of the filter element 1 of Fig. 15 (a) (b) with an associated filter housing 10.

The filter element 1 according to the seventh embodiment comprises a media pack 2 and a seal 3, the seal being directly or indirectly connected to the media pack 2 in a sealing manner. The media pack 2 is a pleated media pack arranged in a tubular manner. At a first end of the media pack 2, a first end cap 4 of the filter element 1 is provided in a sealing manner. The seal can comprise or consist of a polyurethane material, such as a foamed polyurethane material. The first end cap 4 can comprise or consist of a polyurethane material, such as a foamed polyurethane material. The first end cap 4 and the seal can be made of a single material. Alternatively, the end cap 4 can comprise a hard plastic material, to which a seal 3, for instance a polyurethane or polyurethane comprising seal 3 is attached in a sealing manner. The end cap can further comprise a support structure 5 for the seal 3, for instance made from, and preferably unitary with, the hard plastic material of the end cap 4.

The filter element comprises a longitudinal axis, marked a Z-axis in the drawing.

The seal 3 comprises an almost complete circumferential axially extending seal portion 34 that extends in the axial direction from the end cap 4, in a direction away from the filter media 2, adjacent to the outer sidewall of the media pack 2. The circumferential axially extending seal portion 34 is though interrupted by two bridge portions 31 deviating the seal 3 towards an "external" seal portion 38 on the outer surface of the media pack 2. The external portion 38 of seal 3 is a portion of the seal for which the projection along the Z-axis lies outside the projection of the media pack 2 along the same axis.

The seal 3 extends along a closed loop path around the longitudinal axis Z. The seal defines a predetermined sealing direction with respect to the longitudinal axis along the closed loop path. The sealing surface of seal 3 is marked in a relatively thicker black line in Fig. 16.

The predetermined sealing direction is not constant along the loop path.

The seal 3 comprises a first seal portion 30 along the loop path wherein the predetermined sealing direction is generally outward (the outer surface of the external seal portion 38) and a second seal portion 32 along the loop path wherein the predetermined sealing direction is generally inward (the inner surface of the circumferential axially extending seal portion 34. The predetermined sealing direction of seal 3 along the closed loop path remains parallel to a single plane, mapped as the X-Y plane, which lies perpendicular to the longitudinal axis Z.

The end cap 4 is open, having a central outlet opening 11.

The first seal portion 30 and the second seal portion 32 are connected by bridging portions 31 of seal 3. The bridging portions are provided at least in part on the axial end surface of the end cap 4. At least a portion of the bridging portion 31 is adapted and arranged for sealing in a tangential direction T, the tangential direction being substantially perpendicular to a radial direction of the filter element 1. For instance, when described in cylindrical coordinates (θ, z, r), a portion of the bridging portion 31 extends in the r-direction having constant z and θ coordinates and the sealing direction is perpendicular to the bridging portion 31.

In some embodiments, the bridging portion may only comprise a small area (single point) or line having a sealing direction being tangential, for instance when the bridging portion 31 would comprise a rounded or U-shaped profile in a projection on the X-Y plane.

The bridging portion 31 comprises first and second connecting sections 311, 312 connecting the portion of the bridging portion which is adapted and arranged for sealing in a tangential direction with the first seal portion 30 and the second seal portion 32 respectively. As explained further on, the second connection section 312 also comprises a step in the Z-direction towards the center of the filter element 1.

The seal 3 (or sealing surface) reverses angular direction one or more times, here four times (twice at each bridge section), when following the seal 3 along the closed loop path. In other words, the seal (or sealing surface) makes a step back in the angular direction two times, when following the seal 3 along the closed loop path. In still another view, the seal 3 (or sealing surface), when described in cylindrical coordinates (θ, z, r), comprises an even number of at least two sections wherein the evolution of θ is reversed when following the seal along the closed loop path.

The seal 3 (or sealing surface) comprises at least one axial step S. In other words, the seal or sealing surface of the seal 3, when described in cylindrical coordinates (θ, z, r), comprises a generally constant z-coordinate (generally lies in a single plane), apart from one or more sections where the z-coordinate decreases, possibly remains at a different constant value, and increases again, when following the seal along the closed loop path, such as to define a step S of the seal (towards the other axial end of the media pack 2) on the outer surface of the filter element 1 or media pack 2. As described before, the bridging portion 31 can comprise a corresponding step portion.

The ratio between the length of the second sealing portion 32 and the length of the first sealing portion (L(SP2)/L(SP1)) is larger than 8. In other words, the second sealing portion 32 is more than eight times the length of the first sealing portion 30.

The filter element can optionally comprise a seal support structure 5 (not depicted) attached to the media pack 2 in a sealing manner, wherein the seal 3 is at least partially (or completely) supported by the support structure 5. Alternatively, the media pack comprises a reinforced portion constituting a seal support structure 5 for the seal 3, wherein the seal 3 is at least partially supported by the seal support structure 5.

The filter element can comprise a second end cap 7 and the other axial end of the media pack 2, which is of the closed type but can also be of the open type.

Fig. 16 and 17(a), (b) and (c) illustrate how the external portion 38 of seal 3 interacts with other elements of the filter assembly. Fig. 16 illustrates a housing cover 103 which comprises an axially extending outer filter liner 1031 in the form of a tower of the cylinder type, adapted for receiving the filter element 1 in an internal volume thereof. A rim at the free end of the tower comprises an axially extending recess that is adapted and arranged to receive the external portion 38 of the filter element 1, allowing angular alignment of the (asymmetric) cover 103 with the filter element 1. The external seal portion 38 then seals against an inner portion of the rim at the free end of the tower (see dashed line). The main housing body 104, which forms the housing 10 in combination with the housing cover 103, comprises an outlet 102, which is arranged at the axially opposite side of the cover 103. The outlet 102 is connected with a tower of the cylinder or conical type forming an inner liner 1045 of the filter element 1. The main housing portion 104 comprises an axially extending longitudinal slot or recess 1046 in its radially outer surface, which is adapted for receiving and guiding the external portion 38 in a predetermined angular position. This way also angular alignment between the filter element 1 and the main housing portion 104 can be achieved, and thus also alignment between the main housing portion 104 and the cover 103.

An internal surface of the main housing portion 103 further comprises a suitable sealing surface, for instance comprising a circumferential trench, for sealing against the rest of the seal 3 as illustrated in Fig. 16.

The use of the described bridge portions 31 and external portion 38 of the seal also provides space for a side-entry 1047 into the inner volume of the filter element, for instance for a pressure or other sensor, which is an elegant and space-saving solution. See Fig. 17(b).

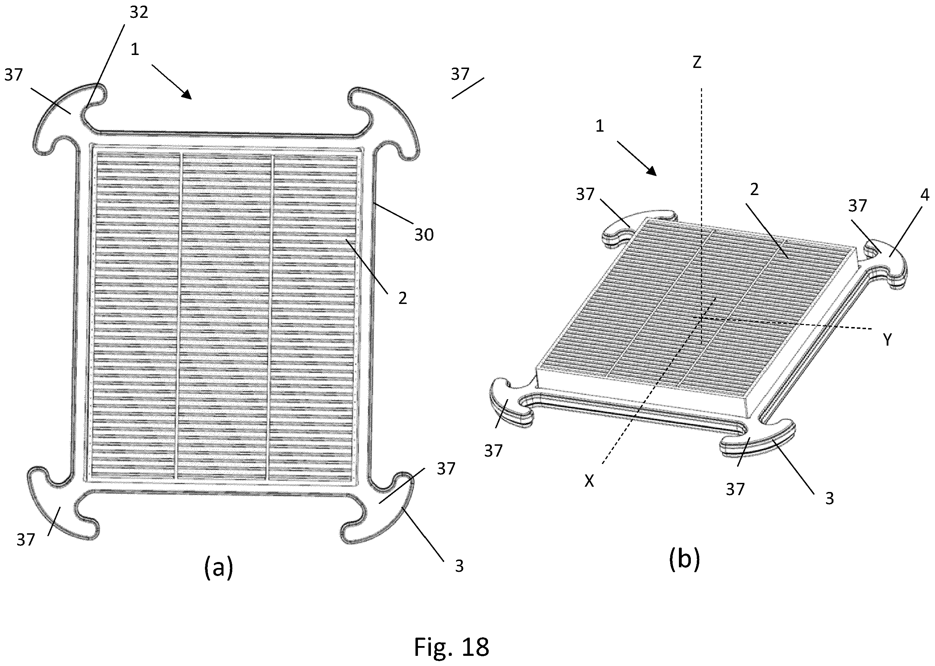

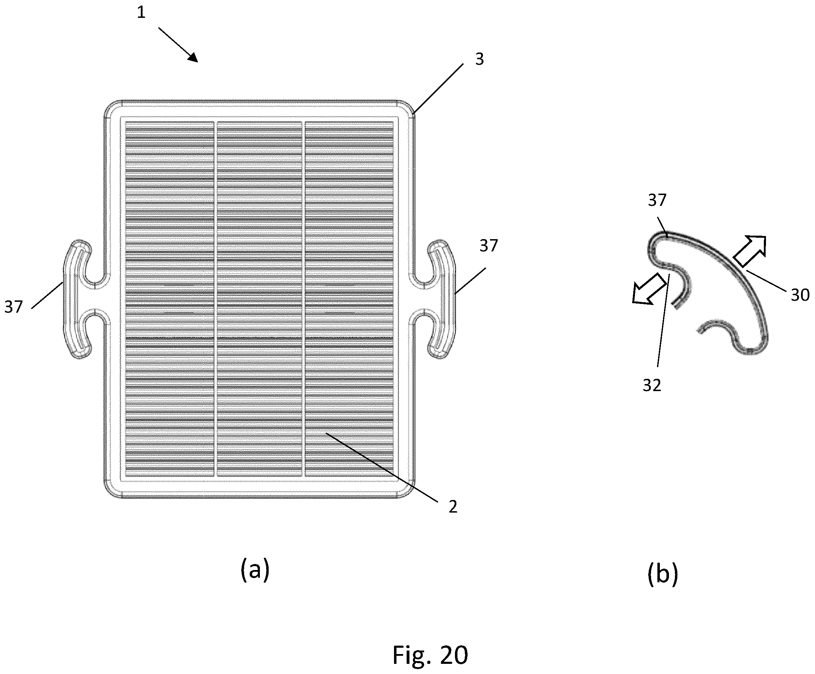

Fig. 18 (a) (b) are respectively a top view and a perspective view of an eighth embodiment of the present disclosure. Panel filter 1 comprises a rectangular pleated media pack 2 arranged in a single plane (X-Y plane). The filter element may comprise a circumferential seal frame or support structure 5 which is attached to the media pack 2 in a sealing manner and surrounds the media pack 2. Seal 3 is directly or indirectly connected to the media pack 2 in a sealing manner. For instance, the seal 3 is attached to the support frame 5 or constitutes the support frame 5. The filter element comprises a longitudinal axis Z (even if the height of the media is typically relatively small compared to the dimensions of a panel filter), defined as an axis perpendicular on the X-Y plane and cutting the X-Y plane in a central position. The seal 3 extends along a closed loop path around the longitudinal axis, or the seal extends along a closed loop path around the filter media pack 2. The projection along the Z-direction of the seal 3 thereby preferably lies completely outside the projection along the Z-direction of the media pack 2. Seal 3 defines a predetermined sealing direction with respect to the longitudinal axis or Z-axis along the closed loop path. The predetermined sealing direction is not constant along the loop path. The seal comprises a first seal portion 30 along the loop path wherein the predetermined sealing direction is generally outward or outward and a second seal portion 32 along the loop path wherein the predetermined sealing direction is generally inward or inward. The predetermined sealing direction of seal 3 along the closed loop path remains parallel to a single plane (XY) perpendicular to the longitudinal axis. In fact, the seal 3 or loop path may describe or comprise at least one outwardly extending structure of the T-type (or hammer-type or mushroom-type), whereby the base of the "T" or "hammer" is directed inwardly (towards the media pack 2) and the head of the "T" or "hammer" is directed outwardly (away from the media pack 2). Preferably, the base has a longitudinal axis that crosses a central region of panel filter 1. In this embodiment, identical "T" or "hammer" structures are included in the loop at every corner of the rectangular panel filter 1. Fig. 20(b) illustrates a detail of the seal portion of the "T" or "hammer" type. In the described orientation of the "T" or "hammer" type portion, the "T" or "hammer" type portion of the seal 3 itself comprises both a first seal portion 30 along the loop path wherein the predetermined sealing direction is generally outward and a second seal portion 32 along the loop path wherein the predetermined sealing direction is generally inward. It is believed that the inclusion of one or more seal portions of the "T" or "hammer" type in the seal along the closed loop provides an improved positioning and/or alignment capability for the filter element. The seal portion of the "T" or "hammer" type can also be used as a handle and manipulation of the panel filter can thus be improved, whether it has a support structure 5 or not.

The seal 3 lies in a single plane and reverses angular direction an even number of at least 2 times when following the seal along the closed loop path. When described in cylindrical coordinates (θ, z, r), the seal comprises no variation in z-coordinate and comprises an even number of at least 2 sections wherein the evolution of θ is reversed when following the seal along the closed loop path.

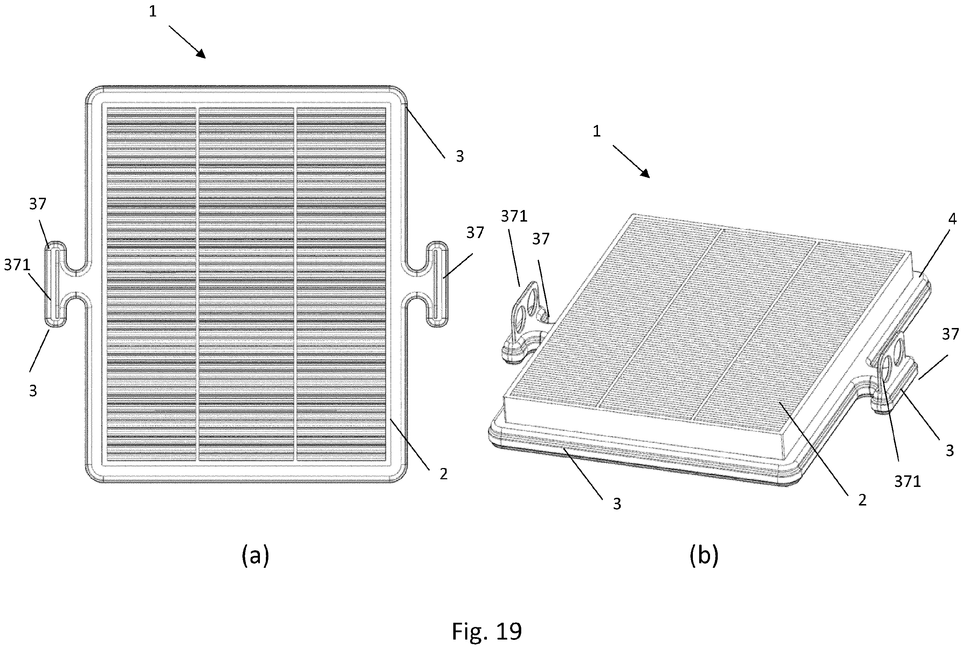

Fig 19 (a) (b) are respectively a top view and a perspective view of a ninth embodiment of the present disclosure. This embodiment is similar to the previous embodiment and differs mainly in the amount and location of the seal portions of the "T" or "hammer" type. Two seal portions of the "T" or "hammer" type have been provided, in the middle of opposed long sides of the rectangular panel filter 1. Fig. 19(b) illustrates further that the seal portions of the "T" or "hammer" type, whether they have a support structure 5 or not, may comprise alignment and/or manipulation features 371. For instance, (e.g. centrally positioned) alignment or manipulation ribs or protrusions 371, possibly comprising manipulation openings, can extend from one or more (e.g. head portions) of the seal portions of the `T'-type, in a direction perpendicular to the X-Y plane. For instance, (e.g. centrally positioned) openings, recesses or trenches 371 can be provided in one or more (e.g. head portions of) the seal portions of the 'T'-type.

Fig. 20(a) depicts a variant thereof, with a slightly different shape of the seal portions of the "T" or "hammer" type. The surface of the head portion of the "T" or "hammer" oriented towards the filter media pack can advantageously be curved such as to provide better grip and manipulation.

Fig. 21 illustrates the concept of a cylindrical coordinate system which has been used in describing certain aspects of the present disclosure. A cylindrical coordinate system is known to the skilled person and is a three-dimensional coordinate system (r,θ,z) that specifies point positions by the distance r from a chosen reference axis (axis Z), the angle θ between the projection of the point on the X-Y plane along the Z direction relative to a chosen reference direction (axis X), and the distance z of the point from the X-Y plane perpendicular to the axis Z.

This application is intended to cover adaptations or variations of the present subject matter. It is to be understood that the above description is intended to be illustrative, and not restrictive.

What could be claimed for instance is:
1. A filter element comprising a media pack and a seal, the seal being directly or indirectly connected to the media pack in a sealing manner, the filter element comprising a longitudinal axis,
   wherein the seal extends along a closed loop path around the longitudinal axis;
   wherein the seal defines a predetermined sealing direction with respect to the longitudinal axis along the closed loop path;
   wherein the predetermined sealing direction is not constant along the closed loop path;
   wherein the seal comprises a first seal portion along the closed loop path wherein the predetermined sealing direction is generally outward and a second seal portion along the loop path wherein the predetermined sealing direction is generally inward; and
   wherein the predetermined sealing direction of the seal along the closed loop path preferably remains parallel to a single plane (XY) perpendicular to the longitudinal axis.
2. A filter element according to item 1, wherein the first seal portion and the second seal portion are connected by a bridging portion of the seal, and
   wherein at least a portion of the bridging portion is adapted and arranged for sealing in a tangential direction, the tangential direction being substantially perpendicular to a radial direction of the filter element.
   (For instance, when described in cylindrical coordinates (θ, z, r), the bridge seal extends in the r-direction having constant z and θ coordinates and the sealing direction is perpendicular on the bridging portion.)
3. A filter element according to item 2, wherein more than 30% or more than 50% of the sealing surface of the bridging portion is adapted and arranged for sealing in a tangential direction.
4. A filter element according to any of items 2 or 3, wherein the bridging portion comprises first and second connecting sections connecting the portion of the bridging portion which is adapted and arranged for sealing in a tangential direction with the first seal portion and the second seal portion respectively.
5. A filter element according to item 4, wherein the first and second connecting sections are substantially parallel and lay in a plane that is at an angle with a plane perpendicular to the longitudinal axis, preferably at an angle within the range of 10 to 80 degrees.
6. A filter element according to item any of the previous items, wherein the seal reverses angular direction one or more times, for instance an even number of at least 2 times when following the seal along the closed loop path.
7. A filter element according to any of the previous items, wherein a sealing surface of the seal, when described in cylindrical coordinates (θ, z, r), comprises an even number of at least 2 sections wherein the evolution of θ is reversed when following the seal along the closed loop path.
8. A filter element according to any of the previous items, wherein the seal comprises at least one axial step.
9. A filter element according to any of the previous items, wherein a sealing surface of the seal, when described in cylindrical coordinates (θ, z, r), comprises a generally constant z-coordinate, apart from one or more sections where the z-coordinate decreases and increases again, when following the seal along the closed loop path.
10. A filter element according to any of the previous items, wherein the seal is a path-connected structure.
11. A filter element according to any of the previous items, wherein the seal is at least partially, or completely circumferential to the media pack.
12. A filter element according to any of the previous items, wherein the ratio between a length of the first sealing portion and a length of the second sealing portion (L(SP1)/L(SP2)) or the ratio between the length of the second sealing portion and the length of the first sealing portion (L(SP2)/L(SP1)) is equal or larger than 2.
13. A filter element according to any of the previous items, further comprising a support structure attached to the media pack in a sealing manner, wherein the seal is at least partially (or completely) supported by the support structure.
14. A filter element according to any of the previous items 1 to 11, wherein the media pack comprises a reinforced portion constituting a support structure for the seal, wherein the seal (3) is at least partially supported by the support structure.
15. A filter element according to item 12 or 13, wherein the predetermined seal direction is defined as the normal direction of a respective portion of the support structure supporting the corresponding seal portion.
16. A filter element according to any of items 12 to 14, wherein the support structure comprises a smooth, continuous, band surface that follows the seal, the band surface preferably corresponding to the closed loop path of the seal, such that for each section or portion of the seal, there is a corresponding portion of the band surface supporting it.
17. A filter element according to item 16, at least one of the band portions corresponding to the first or the second seal portions preferably extends over a length of the closed loop path that is longer than 75%, or longer than 80% or longer than 90% of the length of the loop path.
18. A filter element according to any of the previous items, wherein the first, second and bridging seal portions of the seal are provided at or (preferably directly) adjacent to an axial end of the media pack.
19. A filter element according to any of the previous items, wherein the first seal portion along the loop path is provided at or adjacent to a radially outwardly oriented portion of the media pack, for instance at or adjacent to its outer circumferential wall, and wherein the second seal portion is provided at or adjacent to a radially inwardly oriented portion of the media pack, for instance at or adjacent to its inner circumferential wall.
20. A filter element according to any of the previous items, wherein an axial projection of both the first seal portion and the second seal portion lies outside an axial projection of the media pack.
21. A filter element according to any of the previous items, wherein the seal makes a smooth and continuous transition between respective seal directions of first, second and bridging seal portions.
22. A filter element according to any of the previous items, wherein the seal comprises or consists of polyurethane material, preferably foamed polyurethane material.
23. A filter assembly comprising a housing and a filter element according to any of the previous items operably held within the housing, wherein the housing comprises a predetermined sealing surface for receiving the seal along the closed loop path, the sealing surface being complementary to the seal.
24. A filter assembly according to item 23, wherein a distance between the predetermined sealing surface of the housing for receiving the seal along the closed loop path and the smooth, continuous, band surface of the support structure that follows the seal is kept constant along the closed loop path.

**Reference list**

| | |
|---|---|
| 1 | Filter element |
| 10 | Housing |
| 101 | Housing inlet |
| 102 | Housing outlet |
| 1021 | Outlet tube |
| 1021' | Axially inward extending portion of outlet tube |
| 1022 | Seal receiving recess |
| 10221 | Sidewall of the recess |
| 103 | Housing cover |
| 1031 | Outer liner |
| 1031A, 1031B | Housing bypass tube |
| 104 | Main housing body |
| 1041 | First housing rim |
| 1042 | Second housing rim |
| 1043 | Housing flange |
| 1044 | Sealing surface for hinging portion |
| 1045 | Inner liner |
| 1046 | Slot or recess |
| 1047 | Side-entry |
| 105 | Sealing surface for the second seal portion |
| 106 | Sealing surface for the first seal portion |
| 11 | Filter outlet opening |
| 111 | Filter flange |
| 2 | Media pack |
| 20 | Inflow face |
| 21 | Outflow face |
| 3 | Seal |
| 4 | First end cap |
| 5 | Seal support structure |
| 51 | Support grid |
| 6 | Inner liner |
| 7 | Second end cap |
| 71 | Handle |
| 30 | First seal portion (outward) |
| 31 | Bridging portion |
| 311 | First connecting section |
| 312 | Second connecting section |
| 32 | Second seal portion (inward) |
| 33 | Ribs or grooves |
| 330 | Distance keeper |
| 34 | Axially extending portion |
| 340 | Axial end face |
| 35 | Liner receiving groove |
| 36 | Angled protrusion |
| 37 | "Hammer" or "T" shaped portion |
| 371 | Alignment or manipulation feature |
| 38 | External portion |
| S | Step |
| T | Tangential direction |
| X, Y, Z | Orthogonal axis system |
| (θ, z, r) | Cylindrical coordinates |

## Claims

1. A filter element (1) comprising a media pack (2) and a seal (3), the seal (3) being directly or indirectly connected to the media pack (2) in a sealing manner, the filter element (1) comprising a longitudinal axis,
wherein the seal (3) extends along a closed loop path around said longitudinal axis;
wherein the seal (3) defines a predetermined sealing direction with respect to the longitudinal axis along the closed loop path;
wherein the predetermined sealing direction is not constant along the closed loop path;
wherein said seal (3) comprises a first seal portion (30) along the closed loop path wherein the predetermined sealing direction is generally outward and a second seal portion (32) along the loop path wherein the predetermined sealing direction is generally inward; and wherein said predetermined sealing direction of said seal along said closed loop path remains parallel to a single plane (XY) perpendicular to said longitudinal axis.

2. A filter element according to claim 1, wherein said first seal portion (30) and said second seal portion are connected by a bridging portion (31) of said seal (3), and
wherein at least a portion of said bridging portion is adapted and arranged for sealing in a tangential direction, said tangential direction being substantially perpendicular to a radial direction of said filter element.

3. A filter element according to claim 2, wherein more than 30% or more than 50% of the sealing surface of the bridging portion is adapted and arranged for sealing in a tangential direction.

4. A filter element according to any of claims 2 or 3, wherein said bridging portion comprises first and second connecting sections connecting said portion of said bridging portion which is adapted and arranged for sealing in a tangential direction with said first seal portion (30) and said second seal portion (32) respectively.

5. A filter element according to claim any of the previous claims, wherein said seal reverses angular direction one or more times, for instance for an even number of at least 2 times when following said seal along said closed loop path.

6. A filter element according to any of the previous claims, wherein a sealing surface of said seal, when described in cylindrical coordinates (θ, z, r), comprises an even number of at least 2 sections wherein the evolution of θ is reversed when following said seal along said closed loop path.

7. A filter element according to any of the previous claims, wherein said seal comprises at least one axial step.

8. A filter element according to any of the previous claims, wherein a sealing surface of said seal, when described in cylindrical coordinates (Θ, z, r), comprises a generally constant z-coordinate, apart from one or more sections where the z-coordinate decreases and increases again, when following said seal along said closed loop path.

9. A filter element according to any of the previous claims, wherein the seal (3) is at least partially, or completely circumferential to the media pack (2).

10. A filter element according to any of the previous claims, wherein the ratio between a length of the first sealing portion and a length of the second sealing portion (L(SP1)/L(SP2)) or the ratio between the length of the second sealing portion and the length of the first sealing portion (L(SP2)/L(SP1)) is equal or larger than 2.

11. A filter element according to any of the previous claims, wherein the first, second and bridging seal portions of the seal (3) are provided at or (preferably directly) adjacent to an axial end of the media pack (2).

12. A filter element according to any of the previous claims, wherein said first seal portion (30) along the loop path is provided at or adjacent to a radially outwardly oriented portion of the media pack (2), for instance at or adjacent to its outer circumferential wall, and wherein said second seal portion is provided at or adjacent to a radially inwardly oriented portion of the media pack (2), for instance at or adjacent to its inner circumferential wall.

13. A filter element according to any of the previous claims, wherein an axial projection of both said first seal portion and said second seal portion lies outside an axial projection of said media pack.

14. A filter element according to any of the previous claims, wherein the seal (3) makes a smooth and continuous transition between respective seal directions of first, second and bridging seal portions.

15. A filter assembly comprising a housing (100) and a filter element (1) according to any of the previous claims operably held within the housing (100), wherein the housing (100) comprises a predetermined sealing surface for receiving the seal (3) along the closed loop path, the sealing surface being complementary to the seal (3).
